# EUROPEAN PATENT SPECIFICATION

(11) **EP 2 759 527 B1**
(45) Date of publication and mention of the grant of the patent: **24.01.2018**
(21) Application number: 12834169.0
(22) Date of filing: 21.09.2012
(51) Int. Cl.: B32B 17/10, C03C 27/12

(54) **INTERLAYER FOR LAMINATED GLASS AND LAMINATED GLASS**
ZWISCHENSCHICHT FÜR VERBUNDGLAS UND VERBUNDGLAS
COUCHE INTERMÉDIAIRE POUR VERRE FEUILLETÉ ET VERRE FEUILLETÉ

(30) Priority: 21.09.2011 JP 2011205601; 13.01.2012 JP 2012005320
(43) Date of publication of application: 30.07.2014
(73) Proprietor: Sekisui Chemical Co., Ltd., Osaka-shi, Osaka 530-8565 (JP)
(72) Inventor: SHIMAMOTO, Michio, Kouka-shi, Shiga (JP); MATSUDA, Shota, Wishima-gun, Osaka (JP); YANG, Sinyul, Wishima-gun, Osaka (JP)
(74) Representative: Ter Meer Steinmeister & Partner
(86) International application number: PCT/JP2012/074248
(87) International publication number: WO 2013/042771

(56) References cited:
- EP-A1- 0 605 994
- EP-A1- 2 594 539
- WO-A1-2011/081191
- JP-A- H11 106 594
- JP-A- H11 106 595
- JP-A- 2001 206 742
- JP-A- 2003 183 059
- JP-A- 2008 037 018
- JP-A- 2008 208 003
- US-A- 4 397 976
- US-A- 5 434 207
- US-A1- 2008 064 775

## Description

### TECHNICAL FIELD

The present invention relates to an interlayer film for laminated glass used in laminated glass for vehicles, buildings, and the like. The present invention specifically relates to an interlayer film for laminated glass which contains a polyvinyl acetal resin, a plasticizer and a rosin resin as tackifier. The present invention also relates to a laminated glass comprising the above interlayer film for laminated glass.

### BACKGROUND ART

Laminated glasses scatter fewer pieces of broken glass when damaged by external impact, and thus they are excellently safe. Therefore, such laminated glasses are widely used in vehicles, railway carriages, aircrafts, ships, buildings, and the like. The laminated glass is produced by disposing an interlayer film between a pair of glass plates.

In order to reduce the weight of a laminated glass, studies have recently been performed for making a laminated glass thin. A thinner laminated glass, however, has a reduced sound-insulating property. If a laminated glass with a reduced sound-insulating property is used for the windshield of a vehicle, its sound-insulating property is disadvantageously insufficient against sounds at a register of about 5,000 Hz, such as wind noise and driving sound of wipers.

Then, additional studies have been performed for increasing the sound-insulating property of a laminated glass by changing materials of an interlayer film.

Patent Document 1 discloses, as one example of an interlayer film for laminated glass, a sound-insulating layer containing 100 parts by weight of a polyvinyl acetal resin with a degree of acetalization of 60 to 85 mol%, 0.001 to 1.0 part by weight of at least one metal salt selected from alkali metal salts and alkaline earth metal salts, and 30 parts by weight or more of a plasticizer. This sound-insulating layer may be used alone as an interlayer film, or may be stacked with other layers, and thereby used as a multilayer interlayer film.

JP 2001 206742 A is directed to a laminate film comprising a plurality of plasticized polyvinyl acetal resin films containing a polyvinyl acetal resin (A) of 2000 to 3000 in average degree of polymerization and a polyvinyl acetal resin (B) of 300 to 600 in average degree of polymerization.

EP 2 594 539 is directed to an interlayer film having a monolayer structure comprising only a first layer or a multilayer structure comprising at least two layers including a first layer and a second layer stacked at least on one phase of the first layer, wherein the first layer contains a thermoplastic resin and at least a first plasticizer.

### Related Art Document

### Patent Document

Patent Document 1: JP 2007-070200 A

### SUMMARY OF THE INVENTION

### PROBLEMS TO BE SOLVED BY THE INVENTION

A laminated glass comprising the interlayer film disclosed in Patent Document 1 can have a sound-insulating property that is enhanced to some extent; however, a further enhanced sound-insulating property is required.

The sounds to be insulated by an interlayer film include air-borne sounds such as noises of automobiles and sounds of horns and solid-borne sounds such as noises due to car engine vibration. A laminated glass comprising the interlayer film of Patent Document 1 may have an insufficient sound-insulating property against, especially, solid-borne sounds.

In recent years, fueled vehicles including internal combustion engines are gradually substituted by electric vehicles including electric motors and hybrid electric vehicles including internal combustion engines and electric motors. Laminated glasses used in fueled vehicles including internal combustion engines are especially required to have sound-insulating properties in a comparatively low frequency range. It is still preferred that such laminated glasses used in fueled vehicles including internal combustion engines have excellent sound-insulating properties also in a high frequency range. In contrast, laminated glasses used in electric vehicles and hybrid electric vehicles including electric motors are especially required to have sound-insulating properties in a high frequency range for effective insulation of drive noises of electric motors.

When the interlayer film disclosed in Patent Document 1 is used to produce a laminated glass, the laminated glass has an insufficient sound-insulating property in a high frequency range, which may unavoidably lead to reduction in the sound-insulating property due to a coincidence effect. In particular, such a laminated glass may not have a sufficient sound-insulating property at around 20°C.

Here, the coincidence effect is a phenomenon that, when sound waves strike a glass plate, the transverse wave is propagated on the glass surface due to the rigidity and inertia of the glass plate, and then the transverse wave resonates with the incident sound, so that the sound is transmitted.

Further, in order to increase the sound-insulating property of a laminated glass, studies have recently been performed for adding an excessive amount of a plasticizer to an interlayer film. Such addition of an excessive amount of a plasticizer to an interlayer film can actually enhance the sound-insulating property of a laminated glass. When an excessive amount of a plasticizer is used, however, the plasticizer may disadvantageously bleed out on the surface of the interlayer film in some cases.

The present invention aims to provide an interlayer film for laminated glass which, when used for a laminated glass, can enhance the sound-insulating property of a laminated glass to be obtained, and a laminated glass comprising the interlayer film for laminated glass.

The present invention limitedly aims to provide an interlayer film for laminated glass which, when used for a laminated glass, can enhance the sound-insulating property in a high frequency range of a laminated glass to be obtained, and a laminated glass comprising the interlayer film for laminated glass.

### MEANS FOR SOLVING THE PROBLEMS

One broad aspect of the present invention provides an interlayer film for laminated glass comprising a first layer and a second layer disposed on a first surface of the first layer, wherein the first layer comprises a polyvinyl acetal resin, a plasticizer, and a tackifier, wherein the tackifier is a rosin resin.

In one specific aspect of the interlayer film for laminated glass of the present invention, the second layer comprises a polyvinyl acetal resin, and a degree of acetylation of the polyvinyl acetal resin in the second layer is lower than a degree of acetylation of the polyvinyl acetal resin in the first layer.

In another specific aspect of the interlayer film for laminated glass of the present invention, the second layer comprises a polyvinyl acetal resin and a plasticizer, and an amount of the plasticizer in the second layer for 100 parts by weight of the polyvinyl acetal resin in the second layer is less than an amount of the plasticizer in the first layer for 100 parts by weight of the polyvinyl acetal resin in the first layer.

In still another aspect of the interlayer film for laminated glass of the present invention, the second layer comprises a polyvinyl acetal resin that has a degree of acetylation of 30 mol% or lower.

In still another aspect of the interlayer film for laminated glass of the present invention, the interlayer film further comprises a third layer disposed on a second surface that is opposite to the first surface of the first layer, wherein the third layer comprises a polyvinyl acetal resin, and a degree of acetylation of the polyvinyl acetal resin in the third layer is lower than a degree of acetylation of the polyvinyl acetal resin in the first layer.

In still another aspect of the interlayer film for laminated glass of the present invention, the third layer comprises a polyvinyl acetal resin and a plasticizer, and an amount of the plasticizer in the third layer for 100 parts by weight of the polyvinyl acetal resin in the third layer is less than an amount of the plasticizer in the first layer for 100 parts by weight of the polyvinyl acetal resin in the first layer.

In another specific aspect of the interlayer film for laminated glass of the present invention, the third layer comprises a polyvinyl acetal resin that has a degree of acetylation of 30 mol% or lower.

The laminated glass according to the present invention comprises a first component for laminated glass, a second component for laminated glass, and an interlayer film disposed between the first component for laminated glass and the second component for laminated glass, wherein the interlayer film is the interlayer film for laminated glass formed according to the present invention.

### EFFECT OF THE INVENTION

Since the interlayer film for laminated glass of the present invention comprises a first layer and a second layer disposed on a first surface of the first layer and the first layer comprises a polyvinyl acetal resin, a plasticizer and a tackifier, wherein the tackifier is a rosin resin, it is possible to enhance the sound-insulating property of a laminated glass comprising the interlayer film for laminated glass of the present invention.

### BRIEF DESCRIPTION OF DRAWINGS

[Fig. 1] Fig. 1 is a partially cutaway cross-sectional view schematically illustrating an interlayer film for laminated glass according to one embodiment of the present invention.
[Fig. 2] Fig. 2 is a partially cutaway cross-sectional view schematically illustrating one example of a laminated glass using the interlayer film for laminated glass illustrated in Fig. 1.

### MODE(S) FOR CARRYING OUT THE INVENTION

The present invention will be described below with reference to drawings based on specific embodiments and examples of the present invention.

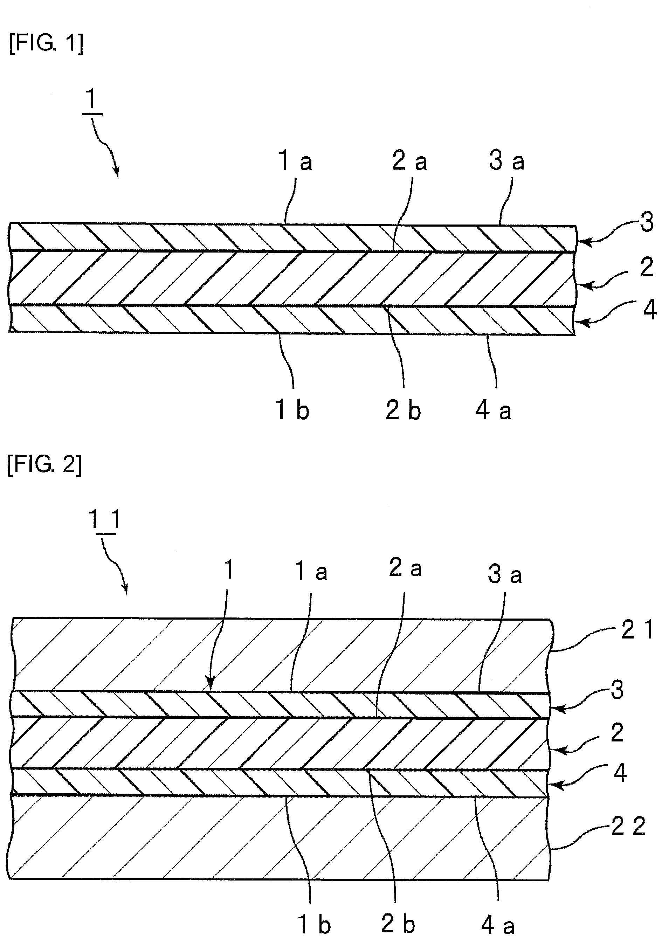

Fig. 1 is a partially cutaway cross-sectional view schematically illustrating an interlayer film for laminated glass according to one embodiment of the present invention.

An interlayer film 1 in Fig. 1 is a multilayer interlayer film. The interlayer film 1 is used in production of a laminated glass. The interlayer film 1 is an interlayer film for laminated glass. The interlayer film 1 comprises a first layer 2, a second layer 3 disposed on a first surface 2a of the first layer 2, and a third layer 4 disposed on a second surface 2b that is opposite to the first surface 2a of the first layer 2. The first layer 2 is an intermediate layer and mainly serves as a sound-insulating layer. The second and third layers 3 and 4 are protection layers and they are surface layers in the present embodiment. The first layer 2 is disposed between the second and third layers 3 and 4. Thus, the interlayer film 1 has a multilayer structure with the second layer 3, the first layer 2, and the third layer 4 stacked in this order.

The second layer 3 and the third layer 4 may have the same composition or may have different compositions. When each of the second and third layers 3 and 4 comprises a polyvinyl acetal resin, the adhesive force of the second and third layers 3 and 4 to the components for laminated glass becomes sufficiently higher.

The present embodiment is mainly characterized in that the interlayer film 1 comprises the first layer 2 and the second layer 3 disposed on the first surface 2a of the first layer 2, and that the first layer 2 comprises a polyvinyl acetal resin, a plasticizer, and a tackifier, wherein the tackifer is a rosin resin. Such characteristics enable to enhance the sound-insulating property of the interlayer film for laminated glass comprising the interlayer film 1. Such characteristics also enable to enhance the sound-insulating property in a high frequency range of a laminated glass comprising the interlayer film 1. Especially, the characteristics enable to effectively enhance the sound-insulating property in a high frequency range exceeding 3 kHz.

The interlayer film 1 comprises the second and third layers 3 and 4 disposed on the respective surfaces of the first layer 2. The second layer may be disposed on at least one surface of the first layer. The second layer may be disposed only on the first surface of the first layer and the third layer may not be disposed on the second surface of the first layer. Nevertheless, preferably, the second layer is disposed on the first surface of the first layer and the third layer is disposed on the second surface of the first layer. The penetration resistance of the laminated glass using the interlayer film becomes further higher by disposing the third layer on the second surface of the first layer.

Hereinafter, details of the first, second, and third layers constituting the interlayer film for laminated glass of the present invention and details of the components contained in the first, second, and third layers will be described.

### (Thermoplastic resin)

The first layer comprises a polyvinyl acetal resin (hereinafter, also referred to as a polyvinyl acetal resin (1)) which is a thermoplastic resin. The polyvinyl acetal resin (1) in the first layer is not particularly limited. One species of the polyvinyl acetal resin (1) may be used alone, or two or more species thereof may be used in combination.

The second layer preferably comprises a thermoplastic resin, and more preferably comprises a polyvinyl acetal resin (hereinafter, also referred to as a polyvinyl acetal resin (2)). The third layer preferably comprises a thermoplastic resin, and more preferably comprises a polyvinyl acetal resin (hereinafter, also referred to as a polyvinyl acetal resin (3)). When the second and third layers comprise the polyvinyl acetal resins (2) and (3), respectively, the adhesive force of the second and third layers to the components for laminated glass is sufficiently enhanced. For each of the second and third layers, one species of the thermoplastic resin may be used alone, or two or more species thereof may be used in combination. One species of each of the polyvinyl acetal resins (2) and (3) may be used alone, or two or more species thereof may be used in combination. The thermoplastic resins used in the second and third layers are not particularly limited. The polyvinyl acetal resins (2) and (3) used in the second and third layers are not particularly limited.

Examples of the thermoplastic resin include polyvinyl acetal resin, ethylene-vinyl acetate copolymerized resin, ethylene-acrylic copolymerized resin, polyurethane resin, and polyvinyl alcohol resin.

A degree of acetylation (amount of acetyl groups) of the polyvinyl acetal resin (1) is preferably 0 mol% or higher, whereas preferably 50 mol% or lower. In order to further enhance the sound-insulating property of the laminated glass, the degree of acetylation (amount of acetyl groups) of the polyvinyl acetal resin (1) is more preferably 10 mol% or higher, whereas more preferably 45 mol% or lower. The degree of acetylation of the polyvinyl acetal resin (1) may be 30 mol% or lower. For further enhancement of the sound-insulating property of the laminated glass, the degree of acetylation of the polyvinyl acetal resin (1) in the first layer preferably exceeds 30 mol%. In the case where a plasticizer (1) to be mentioned later is a diester plasticizer or 3GO represented by the formula (1) to be mentioned later, the degree of acetylation of the polyvinyl acetal resin (1) in the first layer preferably exceeds 30 mol%. When the degree of acetylation of the polyvinyl acetal resin (1) is equal to or higher than the above lower limit, the compatibility between the polyvinyl acetal resin (1) and the plasticizer (1) to be mentioned later is enhanced.

A degree of acetylation of each of the polyvinyl acetal resins (2) and (3) is preferably 0 mol% or higher, more preferably 0.1 mol% or higher, and still more preferably 0.5 mol% or higher, whereas preferably 30 mol% or lower, more preferably 20 mol% or lower, still more preferably 10 mol% or lower, particularly preferably 5 mol% or lower, and most preferably 3 mol% or lower. When the degree of acetylation is equal to or lower than the above upper limit, the penetration resistance of the interlayer film and that of the laminated glass are enhanced. Further, when the degree of acetylation is equal to or lower than the above upper limit, the bleed-out of the plasticizer is suppressed.

When the degree of acetylation of the polyvinyl acetal resins regarding the polyvinyl acetal resins (2) and (3) is 3 mol% or lower, the mechanical property of the interlayer film is further enhanced. This results in further enhancement of the penetration resistance of the laminated glass.

The degree of acetylation of the polyvinyl acetal resin (2) is preferably lower than the degree of acetylation of the polyvinyl acetal resin (1). The degree of acetylation of the polyvinyl acetal resin (3) is preferably lower than the degree of acetylation of the polyvinyl acetal resin (1). When the degree of acetylation of each of the polyvinyl acetal resins (2) and (3) is lower than the degree of acetylation of the polyvinyl acetal resin (1), the sound-insulating property of the laminated glass is enhanced and the penetration resistance of the laminated glass is further enhanced.

The absolute value of the difference between the degree of acetylation of the polyvinyl acetal resin (1) and the degree of acetylation of the polyvinyl acetal resin (2) and the absolute value of the difference between the degree of acetylation of the polyvinyl acetal resin (1) and the degree of acetylation of the polyvinyl acetal resin (3) are each preferably 10 mol% or higher, and more preferably 20 mol% or higher, whereas preferably 50 mol% or lower, and more preferably 30 mol% or lower. When the absolute value between the degree of acetylation of the polyvinyl acetal resin (1) and the degree of acetylation of each of the polyvinyl acetal resins (2) and (3) satisfies the above lower limit and the above upper limit, the sound-insulating property and the penetration resistance of the interlayer film and the laminated glass are further enhanced.

The degree of acetylation is obtained below. The amount of ethylene groups bonded with the acetal group and the amount of the ethylene groups bonded with the hydroxyl group are subtracted from the total amount of ethylene groups in the main chain. The obtained value is divided by the total amount of ethylene groups in the main chain. The obtained mole fraction expressed as percentage is the degree of acetylation. The amount of the ethylene groups bonded with acetal groups, for example, is determined by measurement in conformity with JIS K6728 "Testing methods for polyvinyl butyral".

The polyvinyl acetal resins (1), (2), and (3) are produced by, for example, acetalizing polyvinyl alcohol with an aldehyde. The polyvinyl alcohol may be produced by, for example, saponifying polyvinyl acetate. A degree of saponification of the polyvinyl alcohol is commonly 70 to 99.9 mol%, preferably 75 to 99.8 mol%, and more preferably 80 to 99.8 mol%.

An average degree of polymerization of the polyvinyl alcohol for production of the polyvinyl acetal resins (1), (2), and (3) is preferably 200 or higher, more preferably 500 or higher, still more preferably 1600 or higher, particularly preferably 2600 or higher, and most preferably 2700 or higher, whereas preferably 5000 or lower, more preferably 4000 or lower, and still more preferably 3500 or lower. When the average degree of polymerization is equal to or higher than the above lower limit, the penetration resistance of the laminated glass is further enhanced. When the average degree of polymerization is equal to or lower than the above upper limit, an interlayer film is easily formed.

In order to prevent plate displacement of the laminated glass, the average degree of polymerization of the polyvinyl alcohol is preferably 2600 or higher, and more preferably 2700 or higher. The plate displacement herein means a phenomenon in which, when a laminated glass is stored at high temperature while it is leaned, one glass plate is displaced against the other glass plate due to the weight of the glass plate itself.

In order to further enhance the penetration resistance of the laminated glass, the average degree of polymerization of the polyvinyl alcohol is particularly preferably 2700 or higher but 5000 or lower.

The average degree of polymerization of the polyvinyl alcohol to be used for producing the polyvinyl acetal resin (1) in the first layer is preferably higher than the average degree of polymerization of the polyvinyl alcohol to be used for producing each of the polyvinyl acetal resins (2) and (3) in the second and third layers, by preferably 500 or more, preferably 800 or more, more preferably 1000 or more, still more preferably 1300 or more, and particularly preferably 1800 or more.

The average degree of polymerization of the polyvinyl alcohol can be measured by a method in conformity with JIS K6726 "Testing methods for polyvinyl alcohol".

The carbon number of each acetal group in the polyvinyl acetal resins is not particularly limited. The aldehyde used in production of the polyvinyl acetal resins is not particularly limited. The carbon number of each the acetal group in the polyvinyl acetal resins is preferably 3 to 5, and more preferably 3 or 4. When the carbon number of each the acetal group in the polyvinyl acetal resins is 3 or more, the glass transition temperature of the interlayer film becomes sufficiently low and the sound-insulating property against structure-borne sounds at low temperatures is further enhanced.

The aldehyde is not particularly limited. Commonly, a C1-C10 aldehyde is suitably used. Examples of the C1-C10 aldehyde include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. Among these, propionaldehyde, n-butyraldehyde, isobutyraldehyde, n-hexylaldehyde, or n-valeraldehyde is preferably used, propionaldehyde, n-butyraldehyde, or isobutyraldehyde is more preferably used, and n-butyraldehyde is still more preferably used. One aldehyde may be used alone, or two or more aldehydes may be used in combination.

The polyvinyl acetal resins (1), (2), and (3) are each preferably a polyvinyl butyral resin. The interlayer film for laminated glass of the present invention preferably contains a polyvinyl butyral resin as each of the polyvinyl acetal resins (1), (2), and (3) in the first, second, and third layers, respectively. Polyvinyl butyral resin is easily synthesized. Further, polyvinyl butyral resin allows the interlayer film to exert the adhesive force to the components for laminated glass more appropriately. In addition, it further enhances the light resistance and weather resistance.

A hydroxy group content (amount of hydroxy groups) of the polyvinyl acetal resin (1) is preferably 5 mol% or more, more preferably 10 mol% or more, and still more preferably 15 mol% or more, whereas preferably 45 mol% or less, more preferably 35 mol% or less, still more preferably 30 mol% or less, and particularly preferably 25 mol% or less. When the hydroxy group content is equal to or higher than the above lower limit, the mechanical property of the interlayer film is further enhanced. When the hydroxy group content is equal to or lower than the above upper limit, the sound-insulating property of the laminated glass is further enhanced. In addition, the flexibility of an interlayer film is enhanced, and thus the interlayer film can be easily handled. In order to further enhance the sound-insulating property of the laminated glass, the hydroxy group content of the polyvinyl acetal resin (1) is preferably as low as possible. A hydroxy group content of the polyvinyl acetal resin (1) may be 0 mol%.

A hydroxy group content (amount of hydroxy groups) of each of the polyvinyl acetal resins (2) and (3) is preferably 20 mol% or more, more preferably 25 mol% or more, and still more preferably 30 mol% or more, whereas preferably 50 mol% or less, more preferably 45 mol% or less, still more preferably 40 mol% or less, particularly preferably 35 mol% or less, and most preferably 32 mol% or less. When the hydroxy group content is equal to or higher than the above lower limit, the penetration resistance of the laminated glass is further enhanced. When the hydroxy group content is equal to or lower than the above upper limit, the bleed-out of the plasticizer is suppressed. In addition, the flexibility of an interlayer film is enhanced, and thus the interlayer film can be easily handled.

In order to further enhance the sound-insulating property of the laminated glass, the hydroxy group content of the polyvinyl acetal resin (1) in the first layer is preferably lower than each of the hydroxy group contents of the polyvinyl acetal resins (2) and (3) in the second and third layers, respectively. In order to still further enhance the sound-insulating property of the laminated glass, the hydroxy group content of the polyvinyl acetal resin (1) in the first layer is preferably lower than each of the hydroxy group contents of the polyvinyl acetal resins (2) and (3) in the second and third layers by 1 mol% or more, more preferably by 3 mol% or more, still more preferably by 5 mol% or more, and particularly preferably by 7 mol% or more.

The hydroxy group content of each of the polyvinyl acetal resins (1), (2), and (3) is a value of a mol fraction in percentage (mol%) which is obtained by division of the amount of ethylene groups bonded with hydroxyl groups by the total amount of ethylene groups of the main chain.

A degree of acetalization (in the case of a polyvinyl butyral resin, a degree of butyralization) of the polyvinyl acetal resin (1) is preferably 20 mol% or higher, more preferably 25 mol% or higher, and still more preferably 30 mol% or higher, whereas preferably 65 mol% or lower, more preferably 60 mol% or lower, and still more preferably 55 mol% or lower. When the degree of acetalization is equal to or higher than the above lower limit, the compatibility between the polyvinyl acetal resin (1) and the plasticizer is enhanced, and the bleed-out of the plasticizer is suppressed. When the degree of acetalization is equal to or lower than the above upper limit, the reaction time required for production of the polyvinyl acetal resin is shortened.

A degree of acetalization (in the case of a polyvinyl butyral resin, a degree of butyralization) of each of the polyvinyl acetal resins (2) and (3) is preferably 55 mol% or higher, more preferably 60 mol% or higher, and still more preferably 63 mol% or higher, whereas preferably 85 mol% or lower, more preferably 75 mol% or lower, and still more preferably 70 mol% or lower. When the degree of acetalization is equal to or higher than the above lower limit, the compatibility between each of the polyvinyl acetal resins (2) and (3) and the plasticizer is enhanced, and the bleed-out of the plasticizer is suppressed. When the degree of acetalization is equal to or lower than the above upper limit, the reaction time required for production of the polyvinyl acetal resin is shortened.

The degree of acetalization is a mole percentage calculated from a mole fraction determined by dividing the amount of ethylene groups bonded with an acetal group by the total amount of ethylene groups in the main chain.

The degree of acetalization is calculated by determining the degree of acetylation (degree of acetylation) and the hydroxy group content (amount of vinyl alcohol) in conformity with JIS K6728 "Testing methods for polyvinyl butyral", converting the determined values into mole fractions, and subtracting the resulting values of the degree of acetylation and the hydroxy group content from 100 mol%.

In the case where the polyvinyl acetal resin is a polyvinyl butyral resin, the degree of acetalization (degree of butyralization) and the degree of acetylation can be determined from the results of the measurement in conformity with JIS K6728 "Testing methods for polyvinyl butyral" or in conformity with ASTM D1396-92. Measurement is preferably performed in conformity with ASTM D1396-92.

In order to further enhance the sound-insulating property of the laminated glass, the polyvinyl acetal resin (1) in the first layer is preferably a polyvinyl acetal resin (hereinafter also referred to as a "polyvinyl acetal resin A") with a degree of acetylation of lower than 8 mol%, or a polyvinyl acetal resin (hereinafter also referred to as a "polyvinyl acetal resin B") with a degree of acetylation of 8 mol% or higher. The polyvinyl acetal resin (1) is preferably the polyvinyl acetal resin A, but is also preferably the polyvinyl acetal resin B.

A degree of acetylation (a) of the polyvinyl acetal resin A is lower than 8 mol%, preferably 7.5 mol% or lower, preferably 7 mol% or lower, preferably 6 mol% or lower, and preferably 5 mol% or lower, whereas preferably 0.1 mol% or higher, preferably 0.5 mol% or higher, preferably 0.8 mol% or higher, preferably 1 mol% or higher, preferably 2 mol% or higher, preferably 3 mol% or higher, and preferably 4 mol% or higher. When the degree of acetylation (a) satisfies the above upper limit and lower limit, the compatibility between the polyvinyl acetal resin A and the plasticizer is enhanced, and the sound-insulating property of the laminated glass is further enhanced.

With respect to the polyvinyl acetal resin A, the lower limit of its degree of acetalization (a) is preferably 68 mol%, more preferably 70 mol%, still more preferably 71 mol%, and particularly preferably 72 mol%, whereas the upper limit thereof is preferably 85 mol%, more preferably 83 mol%, still more preferably 81 mol%, and particularly preferably 79 mol%. When the degree of acetalization (a) is equal to or higher than the above lower limit, the sound-insulating property of the laminated glass is further enhanced. When the degree of acetalization (a) is equal to or lower than the above upper limit, the reaction time required for producing the polyvinyl acetal resin A is shortened.

A hydroxy group content (a) of the polyvinyl acetal resin A is preferably 30 mol% or less, preferably 27.5 mol% or less, preferably 27 mol% or less, preferably 26 mol% or less, preferably 25 mol% or less, preferably 24 mol% or less, and preferably 23 mol% or less, whereas preferably 16 mol% or more, preferably 18 mol% or more, preferably 19 mol% or more, and preferably 20 mol% or more. When the hydroxy group content (a) is equal to or lower than the above upper limit, the sound-insulating property of the laminated glass is further enhanced. When the hydroxy group content (a) is equal to or higher than the above lower limit, the adhesive force of the interlayer film is further enhanced.

The polyvinyl acetal resin A is preferably a polyvinyl butyral resin.

A degree of acetylation (b) of the polyvinyl acetal resin B is 8 mol% or higher, preferably 9 mol% or higher, preferably 10 mol% or higher, preferably 11 mol% or higher, and preferably 12 mol% or higher, whereas preferably 30 mol% or lower, preferably 28 mol% or lower, preferably 26 mol% or lower, preferably 24 mol% or lower, preferably 20 mol% or lower, and preferably 19.5 mol% or lower. When the degree of acetylation (b) is equal to or higher than the above lower limit, the sound-insulating property of the laminated glass is further enhanced. When the degree of acetylation (b) is equal to or lower than the above upper limit, the reaction time required for producing the polyvinyl acetal resin B is shortened. In order to further shorten the reaction time required for producing the polyvinyl acetal resin B, the degree of acetylation (b) of the polyvinyl acetal resin B is particularly preferably lower than 20 mol%.

With respect to the polyvinyl acetal resin B, the lower limit of its degree of acetalization (b) is preferably 50 mol%, more preferably 52.5 mol%, still more preferably 54 mol%, and particularly preferably 60 mol%, whereas the upper limit thereof is preferably 80 mol%, more preferably 77 mol%, still more preferably 74 mol%, and particularly preferably 71 mol%. When the degree of acetalization (b) is equal to or higher than the above lower limit, the sound-insulating property of the laminated glass is further enhanced. When the degree of acetalization (b) is equal to or lower than the above upper limit, the reaction time required for producing the polyvinyl acetal resin B is shortened.

A hydroxy group content (b) of the polyvinyl acetal resin B is preferably 30 mol% or less, preferably 27.5 mol% or less, preferably 27 mol% or less, preferably 26 mol% or less, and preferably 25 mol% or less, whereas preferably 18 mol% or more, preferably 20 mol% or more, preferably 22 mol% or more, and preferably 23 mol% or more. When the hydroxy group content (b) is equal to or lower than the above upper limit, the sound-insulating property of the laminated glass is further enhanced. When the hydroxy group content (b) is equal to or higher than the above lower limit, the adhesive force of the interlayer film is further enhanced.

The polyvinyl acetal resin B is preferably a polyvinyl butyral resin.

The polyvinyl acetal resin A and the polyvinyl acetal resin B are each preferably produced by acetalizing a polyvinyl alcohol resin having an average degree of polymerization of higher than 3000 with an aldehyde. The aldehyde is preferably a C1-C10 aldehyde, and more preferably a C4 or C5 aldehyde. The lower limit of the average degree of polymerization of the polyvinyl alcohol resin is preferably 3010, preferably 3050, preferably 3500, preferably 3600, preferably 4000, and preferably 4050, whereas the upper limit thereof is preferably 7000, preferably 6000, preferably 5000, preferably 4900, and preferably 4500. The polyvinyl acetal resins A and B in the first layer are particularly preferably produced by acetalizing a polyvinyl alcohol resin having an average degree of polymerization of higher than 3000 but lower than 4000. In particular, in order to further suppress bubble formation and bubble growth in the laminated glass, thereby sufficiently enhancing the sound-insulating property of the laminated glass, and in order to easily produce an interlayer film, the average degree of polymerization of the polyvinyl alcohol resin used for producing each of the polyvinyl acetal resins A and B in the first layer is preferably 3010 or higher, and more preferably 3020 or higher, whereas preferably 4000 or lower, more preferably lower than 4000, still more preferably 3800 or lower, particularly preferably 3600 or lower, and most preferably 3500 or lower.

### (Plasticizer)

The first layer contains a plasticizer (hereinafter, also referred to as a plasticizer (1)). The second layer preferably contains a plasticizer (hereinafter, also referred to as a plasticizer (2)). The third layer preferably contains a plasticizer (hereinafter, also referred to as a plasticizer (3)). One species of each of the plasticizers (1), (2), and (3) may be used alone, or two or more thereof may be used in combination.

Examples of the plasticizers (1), (2), and (3) include: organic ester plasticizers such as monobasic organic acid esters and polybasic organic acid esters; and organic phosphoric acid plasticizers such as organic phosphoric acid plasticizers and organic phosphorous acid plasticizers. Organic ester plasticizers are preferred. The plasticizers (1), (2), and (3) are each preferably a liquid plasticizer.

The monobasic organic acid esters are not particularly limited. Examples thereof include: glycol esters obtained by a reaction between a glycol and a monobasic organic acid; and esters of a monobasic organic acid and one of triethylene glycol and tripropylene glycol. Examples of the glycol include triethylene glycol, tetraethylene glycol, and tripropylene glycol. Examples of the monobasic organic acid include butyric acid, isobutyric acid, caproic acid, 2-ethylbutyric acid, heptylic acid, n-octylic acid, 2-ethylhexanoic acid, n-nonylic acid, and decylic acid.

The polybasic organic acid esters are not particularly limited. Examples thereof include ester compounds of a polybasic organic acid and a C4-C8 linear or branched alcohol. Examples of the polybasic organic acid include adipic acid, sebacic acid, and azelaic acid.

The organic ester plasticizers are not particularly limited. Examples thereof include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexylcyclohexyl adipate, a mixture of heptyl adipate and nonyl adipate, diisononyl adipate, diisodecyl adipate, heptylnonyl adipate, dibutyl sebacate, oil-modified sebacic alkyds, and mixtures of phosphoric acid esters and adipic acid esters. Organic ester plasticizers other than these may also be used.

The organic phosphoric acid plasticizers are not particularly limited, and examples thereof include tributoxyethyl phosphate, isodecylphenyl phosphate, and triisopropyl phosphate.

In order to further enhance the sound-insulating property of the laminated glass, the plasticizer (1) in the first layer is preferably a diester plasticizer represented by the following formula (1). In order to further enhance the sound-insulating property of the laminated glass, the plasticizers (2) and (3) in the second and third layers are each preferably a diester plasticizer represented by the following formula (1).

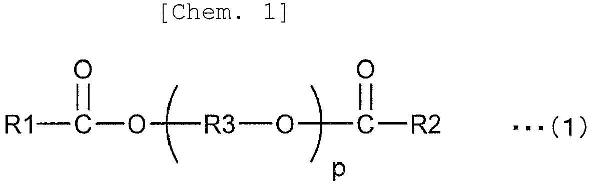

In the formula (1), R1 and R2 each represent a C5-C10 organic group; R3 represents an ethylene group, an isopropylene group, or an n-propylene group; and p represents an integer of 3 to 10.

The plasticizers (1), (2), and (3) each preferably contain at least one of triethylene glycol di-2-ethylhexanoate (3GO) and triethylene glycol di-2-ethylbutyrate (3GH), and more preferably contain triethylene glycol di-2-ethylhexanoate.

The amount of the plasticizer (1) for 100 parts by weight of the polyvinyl acetal resin (1) in the first layer is preferably 25 parts by weight or more, whereas preferably 80 parts by weight or less. In order to further enhance the sound-insulating property of the laminated glass, the amount of the first plasticizer (1) for 100 parts by weight of the polyvinyl acetal resin (1) in the first layer is more preferably 30 parts by weight or more, and still more preferably 45 parts by weight or more, whereas more preferably 70 parts by weight or less, still more preferably 60 parts by weight or less, and particularly preferably 50 parts by weight or less. When the amount of the plasticizer (1) is equal to or bigger than the above lower limit, the flexibility of the interlayer film, the interlayer film can be easily handled, and the penetration resistance of the laminated glass is further enhanced. When the amount of the plasticizer (1) is equal to or smaller than the above upper limit, the transparency of the interlayer film is further enhanced.

The amount of the plasticizer (2) for 100 parts by weight of the polyvinyl acetal resin (2) in the second layer is preferably 5 parts by weight or more, more preferably 10 parts by weight or more, and still more preferably 15 parts by weight or more, whereas preferably 50 parts by weight or less, more preferably 45 parts by weight or less, and still more preferably 40 parts by weight or less. The amount of the plasticizer (3) for 100 parts by weight of the polyvinyl acetal resin (3) in the third layer is preferably 5 parts by weight or more, more preferably 10 parts by weight or more, and still more preferably 15 parts by weight or more, whereas preferably 50 parts by weight or less, more preferably 45 parts by weight or less, and still more preferably 40 parts by weight or less. When the amount of each of plasticizers (2) and (3) is equal to or bigger than the above lower limit, the flexibility of the interlayer film is enhanced, and thus the interlayer film can be easily handled. When the amount of each of plasticizers (2) and (3) is equal to or smaller than the above upper limit, the penetration resistance of the interlayer film is further enhanced.

The amount of the plasticizer (2) (hereinafter, also referred to as the amount (2)) in the second layer for 100 parts by weight of the polyvinyl acetal resin (2) in the second layer is preferably less than the amount of the plasticizer (1) (hereinafter, also referred to as the amount (1)) in the first layer for 100 parts by weight of the polyvinyl acetal resin (1) in the first layer. The amount of the plasticizer (3) (hereinafter, also referred to as the amount (3)) in the third layer for 100 parts by weight of the polyvinyl acetal resin (3) in the third layer is preferably less than the amount of the plasticizer (1) (hereinafter, also referred to as the amount (1)) in the first layer for 100 parts by weight of the polyvinyl acetal resin (1) in the first layer. In the case where the amounts (2) and (3) are each less than the amount (1), the penetration resistance of the laminated glass is further enhanced.

The absolute value of the difference between the amount (1) and the amount (2) and the absolute value of the difference between the amount (1) and the amount (3) each are preferably 10 parts by weight or higher, more preferably 15 parts by weight or higher, and still more preferably 20 parts by weight or higher, whereas preferably 40 parts by weight or lower, more preferably 35 parts by weight or lower, and still more preferably 30 parts by weight or lower. When the absolute value is equal to or bigger than the above lower limit, the sound-insulating property of the laminated glass is further enhanced. When the absolute value is equal to or smaller than the above upper limit, the penetration resistance of the laminated glass is further enhanced.

### (Tackifier)

The first layer contains a tackifier. The first layer containing a tackifier has a more favorable adhesive force to the second and third layers, and further enhances the penetration resistance of the laminated glass. The present inventors have further found that the first layer containing a tackifier leads to an enhanced sound-insulating property of the laminated glass. Further, the first layer containing a tackifier also leads to an enhanced sound-insulating property of the laminated glass in a high frequency range.

The second and third layers each may contain a tackifier, or may contain no tackifier. Examples of the tackifier include rosin resin, terpene resin, and petroleum resin. One of the tackifiers may be used, or two or more thereof may be used in combination.

In order to further enhance the sound-insulating property of the laminated glass, the tackifier in the first layer is a rosin resin.

The rosin resin is a resin including rosin or a rosin derivative as a base resin. Preferable examples of the rosin resin include rosin, acid-modified rosin, rosin-containing diols, rosin esters, hydrogenated rosin esters, and maleic acid-modified rosin esters. Examples of the acid-modified rosin include acrylic acid-modified rosin.

The amount of the tackifier for 100 parts by weight of the polyvinyl acetal resin (1) in the first layer is preferably 10 parts by weight or more, more preferably 20 parts by weight or more, still more preferably 25 parts by weight or more, particularly preferably 30 parts by weight or more, and most preferably 50 parts by weight or more, whereas preferably 500 parts by weight or less, more preferably 300 parts by weight or less, still more preferably 100 parts by weight or less, and particularly preferably 90 parts by weight or less. When the amount of the tackifier is equal to or bigger than the above lower limit, the sound-insulating property of the laminated glass is further enhanced. If the amount of the tackifier exceeds the above upper limit, such an amount of the
tackifier is excessive for enhancing the sound-insulating property.

### (Other components)

The first, second, and third layers each may optionally contain, if necessary, any of additives such as ultraviolet absorbers, antioxidants, light stabilizers, flame retardants, antistatic agents, pigments, dyes, adhesion modifiers, damp proofing agents, fluorescent brighteners, and infrared absorbers. Each of these additives may be used alone, or two or more of these may be used in combination.

### (Interlayer film for laminated glass)

In order to further enhance the sound-insulating property of the laminated glass, in the interlayer film for laminated glass of the present invention, a peak temperature of tanδ which appears at the lowest temperature measured at a frequency of 1 Hz is preferably 0°C or lower.

In order to further enhance the sound-insulating property of the laminated glass at low temperatures, a maximum value of tanδ at a peak temperature of tanδ which appears at the lowest temperature measured at a frequency of 1 Hz is preferably 1.15 or higher, and more preferably 1.25 or higher.

In order to further enhance the sound-insulating property of the laminated glass at high temperatures, a maximum value of tanδ at a peak temperature of tanδ which appears at the highest temperature measured at a frequency of 1 Hz is preferably 0.50 or higher.

In measurement of a peak temperature of tanδ which appears at the lowest temperature, a maximum value of tanδ at a peak temperature of tanδ which appears at the lowest temperature, and a maximum value of tanδ at a peak temperature of tanδ which appears at the highest temperature, the interlayer film for laminated glass is preferably stored under the condition of 23°C for a month before the measurement.

The thickness of the first layer is preferably 0.02 mm or higher, and more preferably 0.05 mm or higher, whereas preferably 1.8 mm or lower, and more preferably 0.5 mm or lower. When the thickness of the first layer satisfies the above lower limit and the above upper limit, the thickness of the interlayer film may not be too thick, and the sound-insulating property of the laminated glass is enhanced.

The thicknesses of the second and third layers each is preferably 0.1 mm or higher, and more preferably 0.2 mm or higher, whereas preferably 1 mm or lower, and more preferably 0.5 mm or lower. When thicknesses of the second and third layers each satisfies the above lower limit and the above upper limit, the thickness of the interlayer film may not be too thick, the sound-insulating property of the laminated glass is enhanced, and the bleed-out of the plasticizer is suppressed.

The thickness of the interlayer film for laminated glass is preferably 0.1 mm or higher, and more preferably 0.25 mm or higher, whereas preferably 3 mm or lower, and more preferably 1.5 mm or lower. When the thickness of the interlayer film satisfies the above lower limit, the penetration resistance of the laminated glass is sufficiently enhanced. When the thickness of the interlayer film satisfies the above upper limit, the transparency of the interlayer film further enhanced.

The method for producing the interlayer film for laminated glass according to the present invention is not particularly limited. A conventionally known method may be employed for the method for producing the interlayer film. A exemplary production method includes mixing a polyvinyl acetal resin, a plasticizer, and other components added according to needs, and forming the interlayer film from the mixture. A production method through extrusion molding is preferred because of suitability for continuous production.

A method for mixing the components is not particularly limited. Exemplary methods include a method using an extruder, plastograph, kneader, Banbury mixer, or calender roll. In particular, a production method using an extruder is preferred because of suitability for continuous production, and a method using a twin-screw extruder is more preferred. The interlayer film for laminated glass of the present invention may be produced by separately preparing the first layer and the second and third layers, and then stacking the first layer and the second and third layers to give a multilayer interlayer film. Alternatively, the interlayer film may be produced by stacking the first layer and the second and third layers by co-extrusion to give an interlayer film.

For excellent efficiency in production of the interlayer film, the second and third layers preferably contain the same polyvinyl acetal resin, the second and third layers more preferably contain the same polyvinyl acetal resin and the same plasticizer, and the second and third layers are still more preferably formed from the same resin composition.

### (Laminated glass)

Fig. 2 is a cross-sectional view schematically illustrating one example of a laminated glass comprising the interlayer film for laminated glass according to one embodiment of the present invention.

A laminated glass 11 illustrated in Fig. 2 comprises an interlayer film 1, a first component for laminated glass 21 and a second component for laminated glass 22. The interlayer film 1 is disposed between the first component for laminated glass 21 and the second component for laminated glass 22. The first component for laminated glass 21 is disposed on a first surface 1a of the interlayer film 1. The second component for laminated glass 22 is disposed on a second surface 1b that is opposite to the first surface 1a of the interlayer film 1. The first component for laminated glass 21 is disposed on an outer surface 3a of the second layer 3. The second component for laminated glass 22 is disposed on an outer surface 4a of the third layer 4.

As described above, the laminated glass of the present invention includes a first component for laminated glass, a second component for laminated glass, and an interlayer film disposed between the first component for laminated glass and the second component for laminated glass, and regarding the above interlayer film, the interlayer film of the present invention is used.

Examples of the first component for laminated glass and the second component for laminated glass (constituent components for laminated glass) include glass plates and PET (polyethylene terephthalate) films. The aforementioned laminated glass includes not only a laminated glass comprising two glass plates and an interlayer film disposed therebetween but also a laminated glass comprising a glass plate, a PET film, and an interlayer film disposed therebetween. The laminated glass refers to a laminate including a glass plate, and preferably includes at least one glass plate.

Examples of the glass plate include inorganic glass and organic glass. Examples of the inorganic glass include float plate glass, heat ray absorbing plate glass, heat rays reflecting plate glass, polished plate glass, molded plate glass, net-reinforced plate glass, wired plate glass, and green glass. The organic glass is synthetic resin glass that substitutes for inorganic glass. Examples of the organic glass include polycarbonate plates and poly(meth)acrylic resin plates. Examples of the poly(meth)acrylic resin plate include polymethyl (meth)acrylate plates.

The thicknesses of the first component for laminated glass and the second component for laminated glass are not particularly limited, and are each preferably within a range of 1 to 5 mm. When the component for laminated glass is a glass plate, a thickness of the glass plate is preferably 1 to 5 mm. When the component for laminated glass is a PET film, a thickness of the PET film is preferably 0.03 to 0.5 mm.

A method for producing the laminated glass is not particularly limited. For example, the interlayer film is disposed between first component for laminated glass and the second component for laminated glass, and the workpiece is passed through a pressing roll or is vacuumed under reduced pressure in a rubber bag, thereby removing the air remaining between the interlayer film and each of the first and second component for laminated glass. Then, the workpiece is preliminarily bonded to each other at about 70°C to 110°C to give a laminate. The laminate is placed in an autoclave or is pressed, so that the laminate is pressure-bonded at about 120°C to 150°C under a pressure of 1 to 1.5 MPa. Thereby, a laminated glass can be produced.

The laminated glass can be used for automobiles, railway carriages, aircrafts, ships, buildings, and the like. The laminated glass can also be used for other uses. The interlayer film is preferably an interlayer film for buildings or vehicles, and more preferably an interlayer film for vehicles. The laminated glass is preferably a laminated glass for buildings or vehicles, and more preferably a laminated glass for vehicles. The interlayer film and the laminated glass can also be used for other uses. The interlayer film and the laminated glass are suitably used for electric vehicles with electric motors and hybrid electric vehicles with internal combustion engines and electric motors. The laminated glass can be used for windshields, side glass, rear glass, roof glass, and the like of automobiles.

The present invention will be more specifically described below with reference to examples. The present invention is not limited to these examples.

In the examples, the following polyvinyl acetal resins (a) and (b) were synthesized and used.

### (Synthesis Example 1)

### Synthesis of polyvinyl butyral resin (a)

A polyvinyl butyral resin (average degree of polymerization: 3000) with a degree of acetylation of 0.5 mol%, a degree of butyralization of 40 mol%, and a hydroxy group content of 59.5 mol% was dissolved in pyridine. Acetic anhydride in an amount of 30 molar equivalents was added to the dissolved polyvinyl butyral resin, and the mixture was stirred at 80°C for 120 minutes. The pyridine was removed, and the polyvinyl butyral resin was washed by water and then dried. This yielded a polyvinyl butyral resin (a) (average degree of polymerization: 3000). The obtained polyvinyl butyral resin (a) had a degree of acetylation of 30.5 mol%, a degree of butyralization of 40 mol%, and a hydroxy group content of 29.5 mol%.

### (Synthesis Example 2)

### Synthesis of polyvinyl butyral resin (b)

A polyvinyl butyral resin (average degree of polymerization: 3000) with a degree of acetylation of 0.5 mol%, a degree of butyralization of 55 mol%, and a hydroxy group content of 44.5 mol% was dissolved in pyridine. Acetic anhydride in an amount of 39.5 molar equivalents was added to the dissolved polyvinyl butyral resin, and the mixture was stirred at 80°C for 120 minutes. The pyridine was removed, and the polyvinyl butyral resin was washed by water and then dried. This yielded a polyvinyl butyral resin (b) (average degree of polymerization: 3000). The obtained polyvinyl butyral resin (b) had a degree of acetylation of 20.5 mol%, a degree of butyralization of 55 mol%, and a hydroxy group content of 24.5 mol%.

In the examples, the following polyvinyl acetal resins (c), (d), (e), and (f) were used.

Polyvinyl acetal resin (c): degree of acetylation 12.8 mol%, degree of butyralization 63.5 mol%, hydroxy group content 23.7 mol%

Polyvinyl acetal resin (d): degree of acetylation 1 mol%, degree of butyralization 68.5 mol%, hydroxy group content 30.5 mol%

Polyvinyl acetal resin (e): degree of acetylation 7.1 mol%, degree of butyralization 72.5 mol%, hydroxy group content 20.4 mol%

Polyvinyl acetal resin (f): degree of acetylation 1.0 mol%, degree of butyralization 81.2 mol%, hydroxy group content 17.8 mol%

### (Example 1)

The obtained polyvinyl butyral resin (a) (100 parts by weight, degree of acetylation: 30.5 mol%), triethylene glycol di-2-ethylhexanoate (50 parts by weight) as a plasticizer, and a rosin resin (50 parts by weight, "PINECRYSTAL KE-311", Arakawa Chemical Industries, Ltd.) as a tackifier were sufficiently kneaded using a mixing roll, thereby providing a composition for an intermediate layer.

The polyvinyl butyral resin (d) (100 parts by weight, degree of acetylation: 1 mol%) and triethylene glycol di-2-ethylhexanoate (3GO) (29 parts by weight) as a plasticizer were sufficiently kneaded, thereby providing a composition for a protection layer.

The obtained composition for an intermediate layer and the obtained composition for a protection layer were molded using a co-extruder, thereby producing an interlayer film (thickness: 0.8 mm) having a layered structure consisting of a protection layer B (thickness: 0.35 mm), an intermediate layer A (thickness: 0.1 mm), and a protection layer B (thickness: 0.35 mm).

The resulting multilayer interlayer film was cut into a size of 30 mm in length × 320 mm in width. The multilayer interlayer film was disposed between two clear float glass plates (25 mm in length × 305 mm in width × 2.0 mm in thickness), and the resulting product was held in a vacuum laminator at 90°C for 30 minutes for vacuum pressing, thereby providing a laminate. Portions of the interlayer film protruding from the glass plates of the laminate were cut off, and thereby a laminated glass was produced.

### (Examples 2 to 15 and Comparative Example 1)

In each example, an interlayer film and a laminated glass were produced in the same manner as in Example 1 except that kinds and amounts of the polyvinyl butyral resins used for an intermediate layer A and a protection layer B, the amount of the plasticizer used of them, and kinds and amounts of the tackifier used of them were chosen as shown in Table 1 or 2.

Kinds of the tackifiers shown in Tables 1 and 2 were as follows.
Rosin resin ("PINECRYSTAL KE-311", Arakawa Chemical Industries, Ltd.)
Acrylic acid-modified rosin ("PINECRYSTAL KE-604", Arakawa Chemical Industries, Ltd.)
Rosin-containing diol ("PINECRYSTAL D-6011", Arakawa Chemical Industries, Ltd.)
Rosin resin ("PINECRYSTAL KR-120", Arakawa Chemical Industries, Ltd.)
Rosin resin ("PINECRYSTAL KR-614", Arakawa Chemical Industries, Ltd.)
Rosin resin ("PINECRYSTAL KR-85", Arakawa Chemical Industries, Ltd.)

### (Evaluations)

### (1) Peak temperature of tanδ at low temperature side, peak maximum value of tanδ at low temperature side, and peak maximum value of tanδ at high temperature side

The obtained interlayer film was stored at 23°C for one month, and the interlayer film was cut out to give an 8-mm-diameter disk. The disk was subjected to measurement of temperature variance of the dynamic viscoelasticity by a shear method using a rheometer ("ARES", Rheometric Scientific, Inc.) with a distortion of 1.0%, a frequency of 1 Hz, and a temperature-rising rate of 5°C/min. Thereby, a peak temperature of tanδ which appears at the lowest temperature, a maximum value of tanδ at the peak temperature of tanδ which appears at the lowest temperature and a maximum value of tanδ at the peak temperature of tanδ which appears at the highest temperature were measured.

### (2) Loss factor

The obtained laminated glass was stored at 20°C for one month. With respect to the laminated glass stored at 20°C for one month, the loss factor was measured by a central exciting method at 20°C using a measurement device "SA-01" (RION Co., Ltd.). The loss factor (loss factor at 20°C) obtained in the 4th mode of the resonance frequency (around 3150 Hz) was evaluated.

Further, with respect to the laminated glass stored at 20°C for one month, the loss factor was also measured by a central exciting method at 30°C using a measurement device "SA-01" (RION Co., Ltd.). The loss factor (loss factor at 30°C) obtained in the 6th mode of the resonance frequency (around 6300 Hz) was evaluated.

Tables 1 and 2 show the results.

**[Table 1]**

| | | | Ex.1 | Ex.2 | Ex.3 | Ex.4 | Ex.5 | Ex.6 | Comp. Ex.1 |
|---|---|---|---|---|---|---|---|---|---|
| Intermediate layer A | Resin | Kind | a | b | b | b | c | b | b |
| | | Degree of butyralization(mol%) | 40 | 55 | 55 | 55 | 63.5 | 55 | 55 |
| | | Degree of acetylation(mol%) | 30.5 | 20.5 | 20.5 | 20.5 | 12.8 | 20.5 | 20.5 |
| | | Hydroxy group content(mol%) | 29.5 | 24.5 | 24.5 | 24.5 | 23.7 | 24.5 | 24.5 |
| | | Amount (parts by weight) | 100 | 100 | 100 | 100 | 100 | 100 | 100 |
| | Amount of plasticizer (parts by weight) | | 50 | 60 | 50 | 50 | 60 | 50 | 60 |
| | Tackifier | Kind | KE-311 | KE-311 | KE-311 | KE-604 | KE-604 | D-6011 | - |
| | | Amount (parts by weight) | 50 | 100 | 50 | 50 | 50 | 50 | - |
| Protection layer B | Resin | Kind | d | d | d | d | d | d | d |
| | | Degree of butyralization(mol%) | 68.5 | 68.5 | 68.5 | 68.5 | 68.5 | 68.5 | 68.5 |
| | | Degree of acetylation(mol%) | 1 | 1 | 1 | 1 | 1 | 1 | 1 |
| | | Hydroxy group content(mol%) | 30.5 | 30.5 | 30.5 | 30.5 | 30.5 | 30.5 | 30.5 |
| | | Amount (parts by weight) | 100 | 100 | 100 | 100 | 100 | 100 | 100 |
| | Amount of plasticizer (parts by weight) | | 29 | 33.5 | 31.5 | 34 | 37.5 | 30 | 33.5 |
| Configuration of film | | | B/A/B | B/A/B | B/A/B | B/A/B | B/A/B | B/A/B | B/A/B |
| Peak temperature (°C) of tan δ at low temperature side | | | -2.1 | -2.6 | -0.1 | -3.9 | -4.1 | -4.7 | -3.7 |
| Peak maximum value of tan δ at low temperature side | | | 1.76 | 1.54 | 1.43 | 1.61 | 1.44 | 1.56 | 1.21 |
| Peak maximum value of tan δ at high temperature side | | | 0.54 | 0.52 | 0.5 | 0.5 | 0.51 | 0.53 | 0.53 |
| Loss factor at 20°C around 3150 Hz | | | 0.68 | 0.56 | 0.52 | 0.59 | 0.52 | 0.53 | 0.42 |
| Loss factor at 20°C around 6300 Hz | | | 0.23 | 0.18 | 0.15 | 0.18 | 0.15 | 0.18 | 0.11 |

**[Table 2]**

| | | | Ex.7 | Ex.8 | Ex.9 | Ex.10 | Ex.11 | Ex.12 | Ex.13 | Ex.14 | Ex.15 |
|---|---|---|---|---|---|---|---|---|---|---|---|
| Intermediate layer A | Resin | Kind | e | e | f | f | c | c | c | c | c |
| | | Degree of butyralization(mol%) | 72.5 | 72.5 | 81.2 | 81.2 | 63.5 | 63.5 | 63.5 | 63.5 | 63.5 |
| | | Degree of acetylation(mol%) | 7.1 | 7.1 | 1 | 1 | 12.8 | 12.8 | 12.8 | 12.8 | 12.8 |
| | | Hydroxy group content(mol%) | 20.4 | 20.4 | 17.8 | 17.8 | 23.7 | 23.7 | 23.7 | 23.7 | 23.7 |
| | | Amount (parts by weight) | 100 | 100 | 100 | 100 | 100 | 100 | 100 | 100 | 100 |
| | Amount of pl | asticizer (parts by weight) | 60 | 60 | 60 | 60 | 60 | 60 | 60 | 60 | 60 |
| | Tackifier | Kind | KE-311 | KE-604 | KE-311 | KE-604 | D-6011 | KR-120 | KR-614 | KR-85 | KE-604 |
| | | Amount (parts by weight) | 50 | 50 | 50 | 50 | 50 | 50 | 50 | 50 | 25 |
| Protection layer B | Resin | Kind | d | d | d | d | d | d | d | d | d |
| | | Degree of butyralization(mol%) | 68.5 | 68.5 | 68.5 | 68.5 | 68.5 | 68.5 | 68.5 | 68.5 | 68.5 |
| | | Degree of acetylation(mol%) | 1 | 1 | 1 | 1 | 1 | 1 | 1 | 1 | 1 |
| | | Hydroxy group content(mol%) | 30.5 | 30.5 | 30.5 | 30.5 | 30.5 | 30.5 | 30.5 | 30.5 | 30.5 |
| | | Amount (parts by weight) | 100 | 100 | 100 | 100 | 100 | 100 | 100 | 100 | 100 |
| | Amount of pl asticizer (parts by weight) | | 35 | 35 | 35 | 35 | 35 | 35 | 35 | 35 | 38 |
| Configuration of film | | | B/A/B | B/A/B | B/A/B | B/A/B | B/A/B | B/A/B | B/A/B | B/A/B | B/A/B |
| Peaktemperature (°C) of tan δ at low temperature side | | | -3.5 | -2.9 | -3.8 | -2.9 | -3.2 | -3.8 | -3.6 | -2.5 | -5.3 |
| Peak maximum value oftan δ at low temperature side | | | 1.42 | 1.48 | 1.4 | 1.46 | 1.48 | 1.51 | 1.41 | 1.42 | 1.33 |
| Peak maximum value of tan δ at high temperature side | | | 0.5 | 0.51 | 0.52 | 0.5 | 0.5 | 0.51 | 0.53 | 0.51 | 0.5 |
| Loss factor at 20°C around 3150 Hz | | | 0.52 | 0.53 | 0.5 | 0.52 | 0.53 | 0.53 | 0.5 | 0.51 | 0.47 |
| Loss factor at 30°C around 6300 Hz | | | 0.15 | 0.16 | 0.15 | 0.15 | 0.16 | 0.16 | 0.15 | 0.15 | 0.14 |

### EXPLANATION OF SYMBOLS

1: Interlayer film
1a: First surface
1b: Second surface
2: First layer
2a: First surface
2b: Second surface
3: Second layer
3a: Outer surface
4: Third layer
4a: Outer surface
11: Laminated glass
21: First component for laminated glass
22: Second component for laminated glass

## Claims

1. An interlayer film for laminated glass, comprising:
a first layer; and
a second layer disposed on a first surface of the first layer,
wherein the first layer comprises a polyvinyl acetal resin, a plasticizer, and a tackifier,
wherein the tackifier is a rosin resin.

2. The interlayer film for laminated glass according to claim 1,
wherein the second layer comprises a polyvinyl acetal resin, and
a degree of acetylation of the polyvinyl acetal resin in the second layer is lower than a degree of acetylation of the polyvinyl acetal resin in the first layer.

3. The interlayer film for laminated glass according to claim 1 or 2,
wherein the second layer comprises a polyvinyl acetal resin and a plasticizer, and
an amount of the plasticizer in the second layer for 100 parts by weight of the polyvinyl acetal resin in the second layer is less than an amount of the plasticizer in the first layer for 100 parts by weight of the polyvinyl acetal resin in the first layer.

4. The interlayer film for laminated glass according to any one of claims 1 to 3,
wherein the second layer comprises a polyvinyl acetal resin that has a degree of acetylation of 30 mol% or lower.

5. The interlayer film for laminated glass according to any one of claims 1 to 4, further comprising
a third layer disposed on a second surface that is opposite to the first surface of the first layer,
wherein the third layer comprises a polyvinyl acetal resin, and
a degree of acetylation of the polyvinyl acetal resin in the third layer is lower than a degree of acetylation of the polyvinyl acetal resin in the first layer.

6. The interlayer film for laminated glass according to claim 5,
wherein the third layer comprises a polyvinyl acetal resin and a plasticizer, and
an amount of the plasticizer in the third layer for 100 parts by weight of the polyvinyl acetal resin in the third layer is less than an amount of the plasticizer in the first layer for 100 parts by weight of the polyvinyl acetal resin in the first layer.

7. The interlayer film for laminated glass according to claim 5 or 6,
wherein the third layer comprises a polyvinyl acetal resin that has a degree of acetylation of 30 mol% or lower.

8. A laminated glass, comprising:
a first component for laminated glass;
a second component for laminated glass; and
an interlayer film disposed between the first component for laminated glass and the second component for laminated glass,
wherein the interlayer film is the interlayer film for laminated glass according to any one of claims 1 to 7.

## Patentansprüche

1. Zwischenschichtfolie für Verbundglas, umfassend:
eine erste Schicht; und
eine auf einer ersten Oberfläche der ersten Schicht angeordnete, zweite Schicht,
wobei die erste Schicht ein Polyvinylacetalharz, einen Weichmacher und einen Klebrigmacher umfasst,
wobei der Klebrigmacher ein Kolophoniumharz ist.

2. Zwischenschichtfolie für Verbundglas nach Anspruch 1,
wobei die zweite Schicht ein Polyvinylacetalharz umfasst, und
ein Acetylierungsgrad des Polyvinylacetalharzes in der zweiten Schicht niedriger ist als ein Acetylierungsgrad des Polyvinylacetalharzes in der ersten Schicht.

3. Zwischenschichtfolie für Verbundglas nach Anspruch 1 oder 2,
wobei die zweite Schicht ein Polyvinylacetalharz und einen Weichmacher umfasst, und
eine Menge des Weichmachers in der zweiten Schicht für 100 Gewichtsteile des Polyvinylacetalharzes in der zweiten Schicht weniger ist als eine Menge des Weichmachers in der ersten Schicht für 100 Gewichtsteile des Polyvinylacetalharzes in der ersten Schicht.

4. Zwischenschichtfolie für Verbundglas nach irgendeinem der Ansprüche 1 bis 3, wobei die zweite Schicht ein Polyvinylacetalharz umfasst, das einen Acetylierungsgrad von 30 Mol-% oder weniger aufweist.

5. Zwischenschichtfolie für Verbundglas nach irgendeinem der Ansprüche 1 bis 4, weiterhin umfassend
eine auf einer zweiten Oberfläche, welche der ersten Oberfläche der ersten Schicht gegenüberliegt, angeordnete dritte Schicht,
wobei die dritte Schicht ein Polyvinylacetalharz umfasst, und
ein Acetylierungsgrad des Polyvinylacetalharzes in der dritten Schicht niedriger ist als ein Acetylierungsgrad des Polyvinylacetalharzes in der ersten Schicht.

6. Zwischenschichtfolie für Verbundglas nach Anspruch 5,
wobei die dritte Schicht ein Polyvinylacetalharz und einen Weichmacher umfasst, und
eine Menge des Weichmachers in der dritten Schicht für 100 Gewichtsteile des Polyvinylacetalharzes in der dritten Schicht geringer ist als eine Menge des Weichmachers in der ersten Schicht für 100 Gewichtsteile des Polyvinylacetalharzes in der ersten Schicht.

7. Zwischenschichtfolie für Verbundglas nach Anspruch 5 oder 6, wobei die dritte Schicht ein Polyvinylacetalharz umfasst, das einen Acetylierungsgrad von 30 Mol-% oder weniger aufweist.

8. Verbundglas, umfassend:
eine erste Komponente für Verbundglas;
eine zweite Komponente für Verbundglas; und
eine Zwischenschichtfolie, die zwischen der ersten Komponente für Verbundglas und der zweiten Komponente für Verbundglas angeordnet ist,
wobei die Zwischenschichtfolie die Zwischenschichtfolie für Verbundglas nach irgendeinem der Ansprüche 1 bis 7 ist.

## Revendications

1. Un film intercouche pour verre feuilleté comprenant:
une première couche; et
une seconde couche disposée sur une première surface de la première couche,
dans lequel la première couche comprend une résine de polyvinylacétal, un plastifiant et un agent collant,
dans lequel l'agent collant est une résine de colophane.

2. Le film intercouche pour verre feuilleté selon la revendication 1,
dans lequel la seconde couche comprend une résine de polyvinylacétal, et
un degré d'acétylation de la résine de polyvinylacétal dans la seconde couche est inférieur à un degré d'acétylation de la résine de polyvinylacétal dans la première couche.

3. Le film intercouche pour verre feuilleté selon la revendication 1 ou 2,
dans lequel la seconde couche comprend une résine de polyvinylacétal et un plastifiant, et
une quantité du plastifiant dans la deuxième couche pour 100 parties en poids de la résine de polyvinylacétal dans la seconde couche est inférieure à une quantité de plastifiant dans la première couche pour 100 parties en poids de la résine de polyvinylacétal dans la première couche.

4. Le film intercouche pour verre feuilleté selon l'une quelconque des revendications 1 à 3,
dans lequel la seconde couche comprend une résine de polyvinylacétal qui a un degré d'acétylation de 30% en moles ou moins.

5. Le film intercouche pour verre feuilleté selon l'une quelconque des revendications 1 à 4, comprenant en outre
une troisième couche disposée sur une seconde surface opposée à la première surface de la première couche,
dans lequel la troisième couche comprend une résine de polyvinylacétal, et
un degré d'acétylation de la résine de polyvinylacétal dans la troisième couche est inférieur à un degré d'acétylation de la résine de polyvinyl dans la première couche.

6. Le film intercouche pour verre feuilleté selon la revendication 5,
dans lequel la troisième couche comprend une résine de polyvinylacétal et un plastifiant, et
une quantité du plastifiant dans la troisième couche pour 100 parties en poids de la résine de polyvinylacétal dans la troisième couche est moins qu'une quantité du plastifiant dans la première couche pour 100 parties en poids de la résine de polyvinylacétal dans la première couche.

7. Le film intercouche pour verre feuilleté selon la revendication 5 ou 6,
dans lequel la troisième couche comprend une résine de polyvinylacétal ayant un degré d'acétylation de 30% en moles ou moins.

8. Un verre feuilleté comprenant:
un premier composant pour verre feuilleté;
un second composant pour le verre feuilleté; et
un film intercouche disposé entre le premier composant pour verre feuilleté et le second composant pour verre feuilleté,
dans lequel le film intercouche est le film intercouche pour verre feuilleté selon l'une quelconque des revendications 1 à 7.
